# EUROPEAN PATENT APPLICATION

(11) **EP 2 072 335 A1**
(43) Date of publication of application: **24.06.2009**
(21) Application number: 08169618.9
(22) Date of filing: 21.11.2008
(51) Int. Cl.: B60R 1/02, B60R 1/06

(54) **Mirror drive control device of vehicle**

(30) Priority: 13.12.2007 JP 2007321546
(71) Applicant: Omron Corporation, Kyoto-shi, Kyoto 600-8530 (JP)
(72) Inventor: Hayama, Kosuke c/o Omron Corporation, Kyoto-shi Kyoto 600-8530 (JP); Satoh Yasuhiro c/o Omron Corporation, Kyoto-shi Kyoto 600-8530 (JP)
(74) Representative: Wilhelms · Kilian & Partner Patentanwälte

(57) **Abstract**

A mirror drive control device of a vehicle includes mirror drive means (4) for driving a mirror surface of a side mirror arranged at a predetermined position of the vehicle upward, downward, rightward, leftward, vehicle state detection means for detecting a state of the vehicle, determination means (1) for determining whether or not a passenger is getting off the vehicle based on the vehicle state detected by the vehicle state detection means, and mirror control means (3) for drive controlling the mirror drive means and moving the mirror surface of the side mirror in an exit checking direction in which a view near the door is ensured when determined that the passenger is getting off the vehicle by the determination means (1).

## Description

### BACKGROUND OF THE INVENTION

### 1. Technical Field

The present invention relates to a mirror drive control device of a vehicle for preventing the door from contacting an obstacle outside the vehicle when getting off the vehicle.

### 2. RELATED ART

A door of a conventional automobile is mostly of a type having a hinge (hereinafter referred to as hinge door) that opens in the outward direction of a passenger compartment, and may contact obstacles near a vehicle thereby scratching the door or may contact other traveling vehicles, leading to accidents due to carelessness when opening the door. Such event occurs as the passenger cannot visually check the door and the obstacle when getting off the vehicle.

In recent years, a device for visually checking a blind spot on a back side of the vehicle with a camera in a side mirror is being widely used, but the device is aimed to assist the blind spot when parking or turning left, and has problems in the remaining amount of battery that a long-time operation is difficult when the engine is stopped such as when getting of the vehicle.

As a related art, a technique of ensuring a back view by a side mirror when a driver gets off the vehicle by storing the side mirror after the driver gets off and closes the door is proposed (refer to, for example, Japanese Unexamined Patent Publication No. 2006-103472).

A technique of rotating the side mirror opposite to a rotating direction of the door according to an open angle of the door when the driver gets off the vehicle and ensuring the back view, and making the door difficult to open when an obstacle that may be hit approaches at the back side is proposed (refer to, for example, Japanese Unexamined Patent Publication No. 2005-324574).

A technique of newly arranging a backseat side mirror, which is stored when a backseat door is locked, and spreads open when unlocked in controlling storage/spread by locking/unlocking is proposed (refer to, for example, Japanese Unexamined Patent Publication No. 8-192683).

A technique of having the door open/close state as a trigger for control of a reverse interlock mirror is provided. A technique of determining whether or not the driver is changed by the opening/closing of the door, and canceling driving of the reverse interlock mirror when the door is opened/closed is proposed (refer to, for example, Japanese Unexamined Patent Publication No. 6-270741).

### SUMMARY

However, in the related art (Japanese Unexamined Patent Publication No. 2006-103472), a timing of storing a mirror is simply changed, and driving of the mirror surface of the mirror is not described, and thus a door cannot be avoided from hitting an obstacle at a side.

In the related art (Japanese Unexamined Patent Publication No. 2005-324574), a back view is merely ensured, and the door cannot be avoided from hitting the obstacle at the side.

In the related art (Japanese Unexamined Patent Publication No. 8-192683), a trigger for storing a side mirror is by locking, and a view when getting off a vehicle cannot be ensured.

In the related art (Japanese Unexamined Patent Publication No. 6-270741), mirror drive is controlled with opening/closing of the door as the trigger, but this is limited to during traveling, and the view when getting off the vehicle cannot be ensured.

It is an object of the present invention to provide a mirror drive control device of a vehicle capable of ensuring the view when the door is opened to get off the vehicle.

In accordance with one aspect of the present invention, a mirror drive control device of a vehicle includes mirror drive means for driving a mirror surface of a side mirror arranged at a predetermined position of the vehicle upward, downward, rightward, leftward; vehicle state detection means for detecting a state of the vehicle; determination means for determining whether or not a passenger is getting off the vehicle based on the vehicle state detected by the vehicle state detection means; and mirror control means for driving and controlling the mirror drive means and moving the mirror surface of the side mirror in an exit checking direction in which a view near the door is ensured when determined that the passenger is getting off the vehicle by the determination means.

The vehicle state is a state of a vehicle detectable by a movement involved at least when the passenger is getting off the vehicle, and includes an ON/OFF state of a side mirror storing SW, a door handle operation state, a vehicle speed, an emergency brake position, a gearshift position, an ignition state, a seatbelt latch state, a door lock state, a foot brake state, a steering wheel operation state, a window state, and a state of a camera for photographing a viewing direction of the driver. The direction in which the view around the door can be ensured is the exit checking direction in which an opening path of the door and the obstacles on the path can be easily recognized, the exit checking direction in which a lateral surface of the door can be easily recognized according to an exit location of the vehicle, or the exit checking direction in which a lower part of the door can be easily recognized.

The vehicle state detection means desirably detects whether or not an exit intension check switch operated when getting off the vehicle is operated by the passenger, whether or not an inner door handle for opening/closing the door of the vehicle is operated by the passenger, whether or not an ignition for starting an engine of the vehicle is operated by the passenger, whether or not an emergency brake for applying brake to four wheels when parking the vehicle is operated by the passenger, whether or not a gearshift lever for changing a mission gear ratio of the vehicle is at a predetermined position. In this case, the determination means determines whether or not the passenger is getting off the vehicle based on the vehicle state detected by the vehicle state detection means, specifically, one or a plurality of each operation described above.

The mirror control means desirably prohibits the drive by the mirror drive means when determined as dangerous to move the mirror surface of the side mirror by the mirror drive means.

The mirror control means may prohibit the mirror drive determining that a possibility of traveling is high when the emergency brake is in the OFF state. The mirror drive may be prohibited determining as traveling when the vehicle speed is other than "0". The mirror drive may be prohibited determining that the possibility of traveling is high when the gearshift position is other than P (parking). The mirror drive may be prohibited determining that the possibility of traveling is high when the ignition is in the ON state. An obstacle approach detection may be performed, the approach of obstacles such as another vehicle may be detected, and the mirror drive may be prohibited when determining that the possibility of collision when opening the door is high. The mirror drive may be prohibited in a combination of when the emergency brake is in the OFF state, the vehicle speed is other than "0", when the gearshift position is other than P (parking), when the ignition is in the ON state, and a presence or absence of approach of an obstacle such as another vehicle.

In the present invention, whether or not the passenger is getting off the vehicle is determined by the determination means based on the vehicle state detected by the vehicle state detection means, the mirror drive means is driven and controlled by the mirror control means when determined that the passenger is getting off the vehicle, and the mirror surface of the side mirror is moved in the exit checking direction in which the view around the door can be ensured, so that the view when opening the door in getting off the vehicle can be ensured.

### BRIEF DESCRIPTION OF THE DRAWINGS

FIG. 1 is a block diagram showing a configuration of a mirror drive control device of a vehicle according to an embodiment of the present invention;
FIGS. 2A and 2B are schematic views each showing a viewing range at a time of mirror drive according to the present embodiment;
FIG. 3 shows a flowchart for describing a first operation example of the mirror drive control device of the vehicle according to the present embodiment;
FIG. 4 shows a flowchart for describing one example of an exit movement checking operation according to the first operation example;
FIG. 5 shows a flowchart for describing another example of the exit movement checking operation according to the first operation example;
FIG. 6 shows a flowchart for describing a second operation example of the mirror drive control device of the vehicle according to the present embodiment;
FIG. 7 shows a flowchart for describing a third operation example of the mirror drive control device of the vehicle according to the present embodiment;
FIG. 8 shows a flowchart for describing a fourth operation example of the mirror drive control device of the vehicle according to the present embodiment;
FIG. 9 shows a flowchart for describing a fifth operation example of the mirror drive control device of the vehicle according to the present embodiment; and
FIG. 10 shows a flowchart for describing an exit movement checking operation according to the fifth operation example.

### DETAILED DESCRIPTION

Embodiments of the present invention will now be described based on the drawings.
The present system is characterized in that an opening path of a door of a vehicle and a mirror direction in which an obstacle on the opening path can be easily visually checked are stored, a movement of a passenger to get out of the vehicle is detected by exit movement detection means, a mirror surface of a side mirror is moved in an exit checking direction stored in advance so that the door and an object to which the door may hit can be easily visually checked, and the side mirror is returned to a normal direction when the movement of the passenger to get on the vehicle and start the vehicle is detected.

The passenger can visually check the door and the obstacle near the door such as a curb of a sidewalk and an adjacent vehicle, and can adjust the opening of the door so that the door does not hit the obstacle by moving the mirror surface of the side mirror in the exit checking direction the door can be seen when the passenger in the vehicle opens the door and gets out of the vehicle, and when making a preliminary movement. In starting the vehicle, the mirror is returned to the normal direction without requiring a special switch operation, and thus troublesome feeling is eliminated.

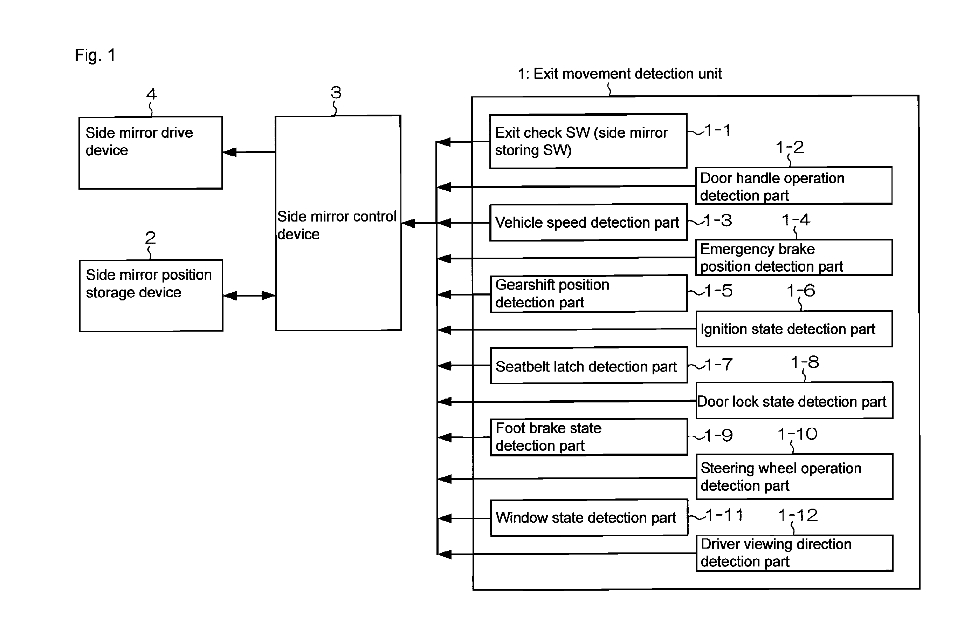

FIG. 1 is a block diagram showing a configuration of a mirror drive control device of a vehicle according to an embodiment of the present invention. In the figure, an exit movement detection unit 1 detects the movement of the passenger to get off the vehicle and the movement of the passenger to get on the vehicle (start the vehicle), and includes an exit check SW (e.g., side mirror storing SW) 1-1, a door handle operation detection part 1-2, a vehicle speed detection part 1-3, an emergency brake position detection part 1-4, a gearshift position detection part 1-5, an ignition state detection part 1-6, a seatbelt latch detection part 1-7, a door lock state detection part 1-8, a foot brake state detection part 1-9, a steering wheel operation detection part 1-10, a window state detection part 1-11, and a driver viewing direction detection part 1-12.

The exit check SW 1-1 is provided to clearly indicate that the passenger intends to get off the vehicle, and corresponds to the side mirror storing SW and the like for storing the side mirror. The door handle operation detection part 1-2 detects that the door handle for opening/closing the door is operated. For instance, an approach or contact of a hand is detected by a capacitance sensor, an electric wave sensor, or the like, or pulling of the door handle may be detected by the ON/OFF of a microswitch arranged in a door handle drive mechanism.

The vehicle speed detection part 1-3 detects the vehicle speed of the vehicle. For instance, a vehicle speed pulse sensor and an acceleration sensor installed in the vehicle are used. When the vehicle speed is not "0" in the vehicle speed pulse sensor or when acceleration is generated in a direction other a vertical direction in the acceleration sensor, an assumption is made as traveling. The emergency brake position detection part 1-4 detects the position (P: parking position or others) of the emergency brake (parking brake). The gearshift position detection part 1-5 detects the position of the gearshift lever.

The ignition state detection part 1-6 detects the ignition state (start if ignition ON, stop if ignition OFF). The seatbelt latch detection part 1-7 detects whether or not the seatbelt is locked. The door lock state detection part 1-8 detects whether or not the door of the vehicle is locked. The foot brake state detection part 1-9 detects the state of the foot brake. The steering wheel operation detection part 1-10 detects the operation of the steering wheel. The window state detection part 1-11 detects the opened/closed state of the window. The driver viewing direction detection part 1-12 photographs a face of the driver with a camera installed in the vehicle, and detects the viewing direction of the driver and the direction of the face from the photographed face image.

A side mirror position storage device 2 stores in advance the opening path of the door and the mirror direction that the obstacles on the path can be easily visually checked, that is, the exit checking direction. A side mirror control device 3 determines whether the movement of the passenger to get off the vehicle or the preliminary movement thereof is made according to various detection signals and the switch ON/OFF signals from the exit movement detection unit 1, and drives and controls a side mirror drive device 4 to move the mirror surface of the side mirror in the exit checking direction stored in the side mirror position storage device 2 when the passenger attempts to get off the vehicle.

The side mirror control device 3 drives and controls the side mirror drive device 4 to return the mirror surface of the side mirror to the normal direction when determining that the passenger is not getting off or does not have the intention of getting off the vehicle according to the various detection signals and the switch ON/OFF signals from the exit movement detection unit 1. The side mirror drive device 4 drives the mirror surface of the side mirror according to the control by the side mirror control device 3.

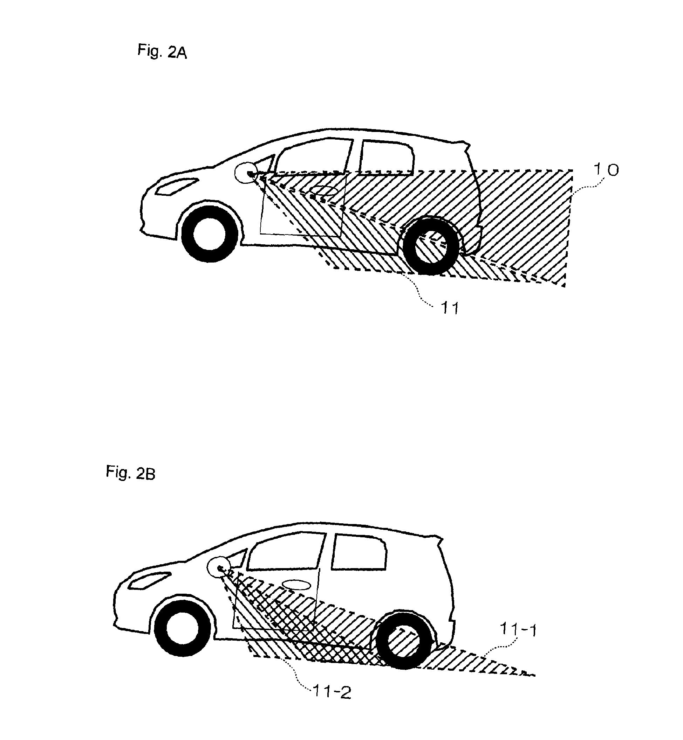

FIGS. 2A and 2B are schematic views each showing a viewing range at a time of mirror drive according to the present embodiment. In the present embodiment, the direction of the mirror surface of the side mirror normally facing the direction of covering a viewing range 10 at a back side of the vehicle is changed to face the exit checking direction in which the opening path of the door and the obstacle on the path, which cover a viewing range 11 shown in the figure, can be easily visually checked when the movement of the passenger to get off the vehicle is detected. When the movement of the passenger to get on the vehicle and start the vehicle (or movement or the intention to get off the vehicle) is detected, the mirror surface of the side mirror is returned to face the normal direction.

As another example of the present embodiment, the direction of the mirror surface of the side mirror facing the direction of covering the viewing range 10 at the back side of the vehicle shown in FIG. 2A may be changed to viewing ranges 11-1 (same as viewing range 11), 11-2 so as to be changed according to the place of getting off from the vehicle, as shown in FIG. 2B. As shown in FIG. 2B, for example, the direction of the mirror surface of the side mirror is changed (first exit checking direction) so as to be in a viewing range 11-1 in which the lateral surface of the door can be seen to avoid hitting the adjacent vehicle in a narrow parking space, or the direction of the mirror surface of the side mirror is changed (second exit checking direction) so as to be in a viewing range 11-2 in which the lower part of the door can be seen for obstacles without height such as the curb of the sidewalk. Whether to be in the viewing range 11-1 or 11-2 can be responded by arranging a switching switch for switching a mirror angle in the existing switch for manually changing the direction of the mirror surface of the side mirror.

### [First operation example]

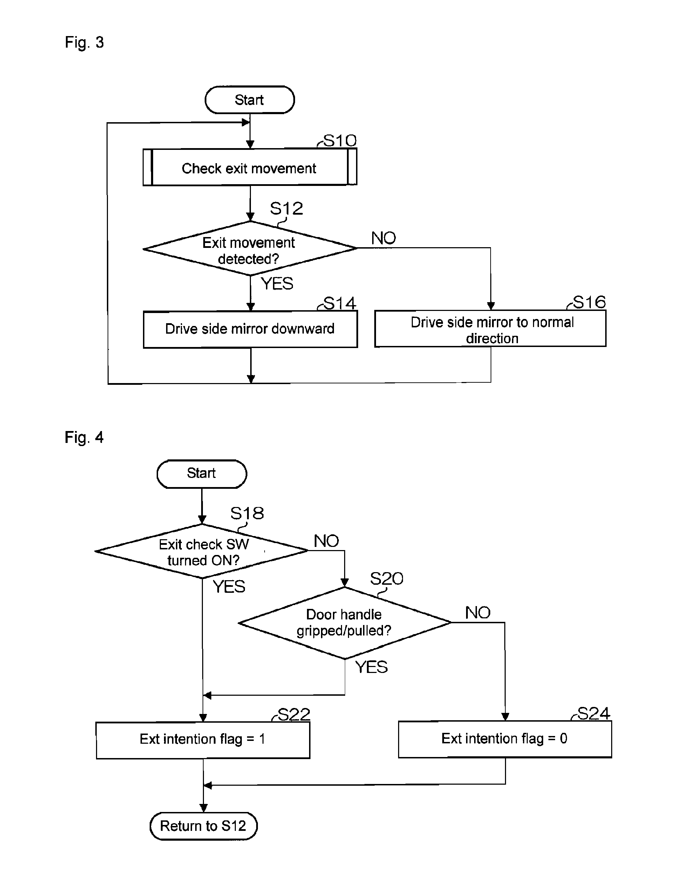

FIG. 3 shows a flowchart for describing a first operation example of the mirror drive control device of the vehicle according to the present embodiment. In the first operation example, the mirror surface of the side mirror is driven so as to face the exit checking direction when the exit check SW (side mirror storing SW) 1-1 is turned ON, when an inner door handle is gripped/pulled, or when both operations are performed.

First, the side mirror control device 3 checks the exit movement of whether the exit check SW (side mirror storing SW) 1-1 is turned ON, whether the inner door handle is gripped/pulled from an output of the door handle operation detection part 1-2, or whether both operations are performed (step S10), and determines whether or not the exit movement is made (step S12). The details on the operation of checking the exit movement will be hereinafter described in detail.

If the exit movement is detected, the side mirror control device 3 reads out exit checking direction data from the side mirror position storage device 2, drives and controls the side mirror drive device 4 according to the exit checking direction data, and drives the mirror surface of the side mirror so as to face the exit checking direction (downward direction) (step S14). If the exit movement is not detected, the mirror surface of the side mirror is driven so as to face the normal direction (backward) (step S16).

According to the first operation example described above, the side mirror control device 3 drives the mirror surface of the side mirror so as to face the exit checking direction (downward direction) when the exit check SW (side mirror storing SW) 1-1 is turned ON, when the inner door handle is gripped/pulled by the door handle operation detection part 1-2, or when both operations are performed, assuming there is an intention to get off the vehicle. The mirror surface of the side mirror is driven so as to face the normal direction (backward) when the exit check SW (side mirror storing SW) 1-1 is turned OFF, or when the inner door handle is not operated by the door handle operation detection part 1-2, assuming there is no intention to get off the vehicle. Therefore, the passenger can notice the presence or the approach of an obstacle outside the vehicle by ensuring the view when opening the door, thereby preventing accidents when a hinge door is opened.

FIG. 4 shows a flowchart for describing one example of the checking operation of the exit movement described above according to the present embodiment. The side mirror control device 3 determines whether or not the exit check SW (side mirror storing SW) 1-1 is turned ON (step S18), and sets an exit intention flag to "1" if the exit check SW 1-1 is turned ON (step S22). The process is then returned to step S12 of FIG. 3.

If the exit check SW (side mirror storing SW) 1-1 is not turned ON, whether or not the door handle is gripped/pulled is determined from the output of the door handle operation detection part 1-2 (step S20), and if the door handle is gripped/pulled, the exit intention flag is set to "1" in step S22 and the process is then returned to step S12 of FIG. 3.

If the exit check SW 1-1 is turned OFF and the door handle is not operated from the door handle operation detection part 1-2, the exit intention flag is set to "0" (step S24), and thereafter, the process is returned to step S12 of FIG. 3.

The side mirror control device 3 determines whether or not the exit movement is detected in the state of the exit intention flag. That is, the side mirror control device 3 assumes that the exit movement is detected if the exit intention flag is "1 ", and assumes that the exit movement is not detected if the exit intention flag is "0". Therefore, in this example, the mirror surface of the side mirror is driven so as to face the exit checking direction (downward) when the exit check SW 1-1 is turned ON or the door handle is gripped/pulled, assuming that the exit movement is made. The mirror surface of the side mirror is driven so as to face the normal direction (backward) when the exit check SW 1-1 is turned OFF and the door handle is not operated.

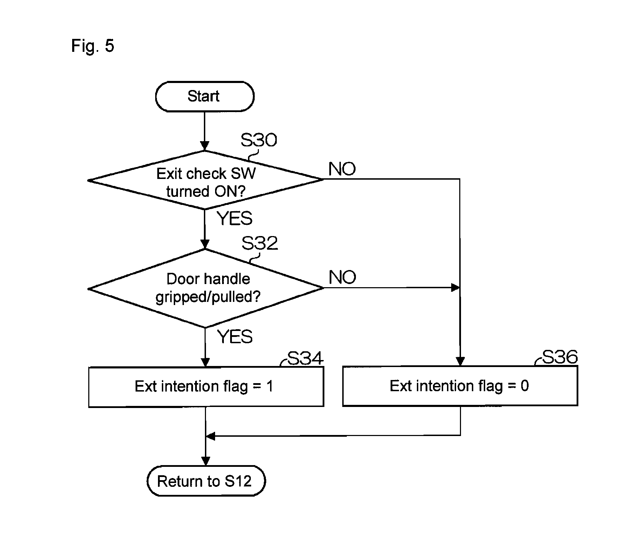

FIG. 5 shows a flowchart describing another example of the checking operation of the exit movement described above according to the present embodiment. The side mirror control device 3 determines whether or not the exit check SW (side mirror storing SW) 1-1 is turned ON (step S30), determines whether the door handle is gripped/pulled from the output of the door handle operation detection part 1-2 (step S32) if the exit check SW 1-1 is turned ON, and sets the exit intention flag to "1" (step S34) if the door handle is gripped/pulled, and then the process is returned to step S12 of FIG. 3.

If the exit check SW (side mirror storing SW) 1-1 is turned OFF or the door handle is not operated, the exit intention flag is set to "0" (step S36), and thereafter, the process is returned to step S12 of FIG. 3.

Similar to the example described above, the side mirror control device 3 assumes that the exit movement is detected if the exit intention flag is "1", and assumes that the exit movement is not detected if the exit intention flag is "0". Therefore, in this example, the mirror surface of the side mirror is driven so as to face the exit checking direction (downward) when the exit check SW 1-1 is turned ON and the door handle is gripped/pulled, assuming that the exit movement is made. The mirror surface of the side mirror is driven so as to face the normal direction (backward) when the exit check SW (side mirror storing SW) 1-1 is turned OFF or the door handle is not operated.

### [Second operation example]

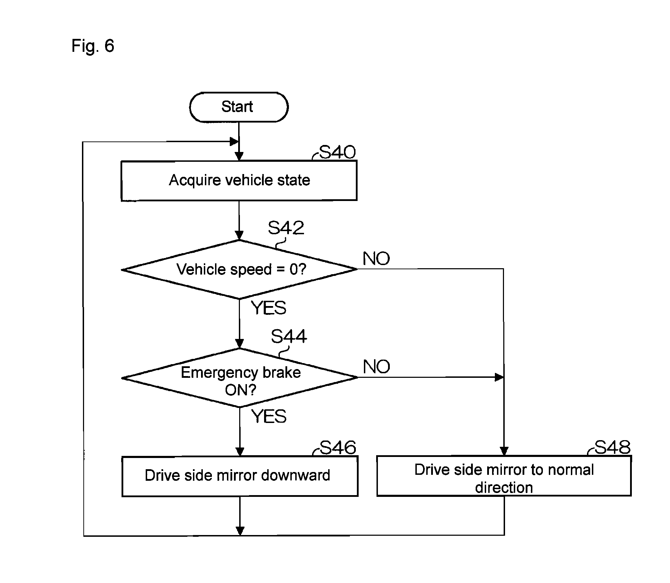

FIG. 6 shows a flowchart describing a second operation example of the mirror drive control device of the vehicle according to the present embodiment. In the second operation example, the mirror surface of the side mirror is driven so as to face the exit checking direction when the vehicle speed is "0" and the emergency brake is ON (assuming getting off the vehicle with the engine turned on).

The side mirror control device 3 acquires the output (vehicle speed) from the vehicle speed detection part 1-3 and the output (ON when the emergency brake is pulled, OFF when the emergency brake is released) from the emergency brake state detection part 1-4 as a preliminary movement of getting off the vehicle (step S40). Then, whether or not the vehicle speed is "0", that is, whether the vehicle is stopped or not is determined (step S42). If the vehicle speed is "0", that is, if stopped, whether or not the emergency brake is ON is determined (step S44).

If the emergency brake is ON, that is, if the emergency brake is pulled, determination is made as getting off the vehicle with the engine turned on, the exit checking direction data is read out from the side mirror position storage device 2, the side mirror drive device 4 is driven and controlled according to the exit checking direction data, and the mirror surface of the side mirror is driven so as to face the exit checking direction (downward) (step S46).

If the vehicle speed is not "0", that is, if traveling, or if the emergency brake is OFF, that is, if there is no intention to get off the vehicle, the mirror surface of the side mirror is driven so as to face the normal direction (backward) (step S48).

According to the second operation example, the side mirror control device 3 drives the mirror surface of the side mirror so as to face the exit checking direction (downward) when the vehicle speed is "0" and the emergency brake is ON, assuming there is an intention to get off the vehicle. The side mirror control device 3 drives the mirror surface of the side mirror so as to face the normal direction (backward) when the vehicle speed is not "0" and the emergency brake is OFF, assuming there is no intention to get off the vehicle.

### [Third operation example]

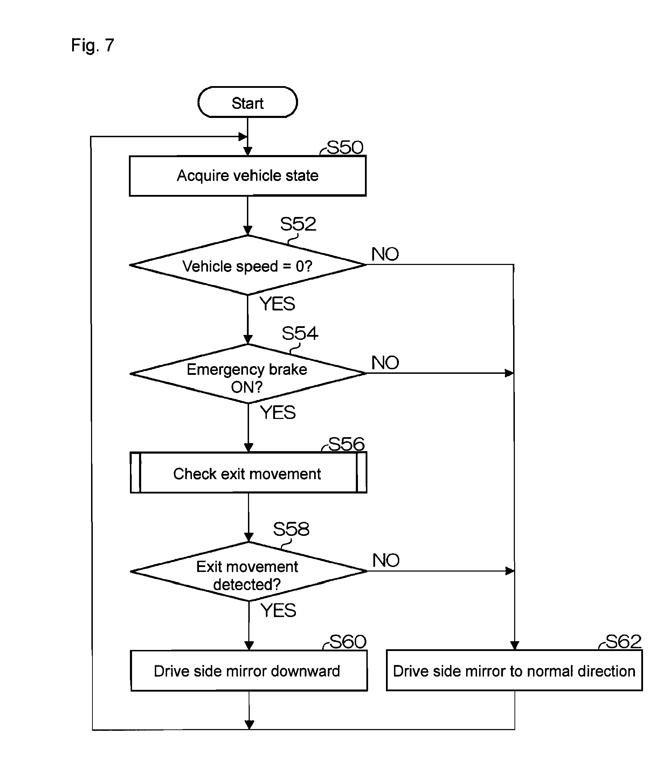

FIG. 7 shows a flowchart for describing a third operation example of the mirror drive control device of the vehicle according to the present embodiment. In the third operation example, the mirror surface of the side mirror is driven so as to face the exit checking direction when the vehicle speed is "0" and the emergency brake is ON, and furthermore, when the exit check SW is turned ON, the inner door handle is gripped/pulled, or both operations are performed.

The side mirror control device 3 acquires the output (vehicle speed) of the vehicle speed detection part 1-3 and the output (ON when the emergency brake is pulled, OFF when the emergency brake is released) of the emergency brake state detection part 1-4 (step S50) as a preliminary movement of getting off the vehicle. Whether or not the vehicle speed is "0", that is, whether the vehicle is stopped or not is determined (step S52). If the vehicle speed is "0", that is, if stopped, whether or not the emergency brake is ON is determined (step S54).

If the emergency brake is ON, that is, if the emergency brake is pulled, the exit movement of whether the exit check SW (side mirror storing SW) 1-1 is turned ON, whether the inner door handle is gripped/pulled from the output of the door handle operation detection part 102, or whether both operations are performed is checked (step S56), and whether or not the exit movement is made is determined (step S58). The checking operation of the exit movement is the same as step S10 (i.e., FIG. 4 or 5) in the first operation example described above.

When the exit movement is detected, the side mirror control device 3 reads the exit checking direction data from the side mirror position storage device 2, drives and controls the side mirror drive device 4 according to the exit checking direction data, and drives the mirror surface of the side mirror so as to face the exit checking direction (downward).

When the vehicle speed is not "0" (traveling), when the emergency brake is OFF, or when the exit movement is not detected, the side mirror control device 3 drives the mirror surface of the side mirror so as to face the normal direction (backward) (step S62).

According to the third operation example, the side mirror control device 3 drives the mirror surface of the side mirror so as to face the exit checking direction when the vehicle speed is "0" and the emergency brake is ON, and furthermore, the exit check SW is turned ON, or the inner door handle is gripped/pulled, or both operations are performed, assuming there is an intention to get off the vehicle. The side mirror control device 3 drives the mirror surface of the side mirror so as to face the normal direction (backward) when the vehicle speed is not "0" and the emergency brake is OFF, or if the exit check SW is turned OFF or the inner door handle is not operated, assuming there is no intention to get off the vehicle.

### [Fourth operation example]

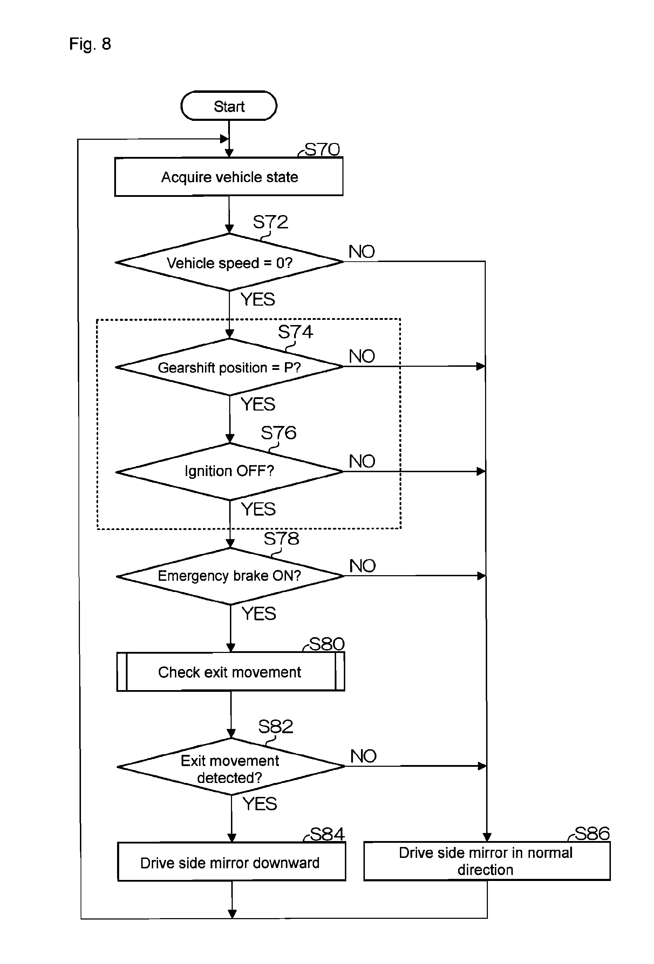

FIG. 8 shows a flowchart for describing a fourth operation example of the mirror drive control device of the vehicle according to the present embodiment. In the fourth operation example, the mirror surface of the side mirror is driven to face the exit checking direction when the vehicle speed is "0", the gearshift position is P (parking), the ignition is turned OFF, the emergency brake is ON, and furthermore, when the exit check SW is turned ON, or the inner door handle is gripped/pulled, or both operations are performed.

The side mirror control device 3 acquires, as the preliminary movement of getting off the vehicle, the vehicle speed from the vehicle speed detection part 1-3, the gearshift position from the gearshift position detection part 1-5, the ON/OFF state of the ignition from the ignition position detection part 1-6, and the state of the emergency brake (ON when pulled, OFF when released) from the emergency brake state detection part 1-4 (step S70). Whether or not the vehicle speed is "0", that is, whether or not the vehicle is stopped is then determined (step S72).

Whether the gearshift position is at P (parking) is determined when the vehicle speed is "0", that is, when the vehicle is stopped (step S74). If the gearshift position is P (parking), whether or not the ignition is turned OFF is determined (step S76). If the ignition is turned OFF, whether or not the emergency brake is ON is determined (step S78).

If the emergency brake is ON, that is, if the emergency brake is pulled, the exit movement of whether or not the exit check SW (side mirror storing SW) 1-1 is turned ON, whether or not the inner door handle is gripped/pulled, or whether both operations are performed is checked (step S80), and whether or not the exit movement is made is determined (step S82). The checking operation of the exit movement is the same as step S10 in the first operation example (i.e., FIGS. 4 and 5) described above.

When the exit movement is detected, the side mirror control device 3 reads out the exit checking direction data from the side mirror position storage device 2, drives and controls the side mirror drive device 4 according to the exit checking direction data, and drives the mirror surface of the side mirror so as to face the exit checking direction (downward) (step S84).

The side mirror control device 3 drives mirror surface of the side mirror to face the normal direction (backward) when the vehicle speed is not "0" (traveling), the gearshift position is at a position other than P (parking), the ignition is turned ON, or the emergency brake is OFF, or when the exit movement is not detected (step S86).

According to the fourth operation example, the mirror surface of the side mirror is driven to face the exit checking direction when the vehicle speed is "0", the gearshift position is at P (parking), the ignition is turned OFF, the emergency brake is ON, and furthermore, when the exit check SW is turned ON, or the inner door handle is gripped/pulled, or both operations are performed, assuming there is an intention to get off the vehicle.

The mirror surface of the side mirror is driven to face the normal direction (backward) when the vehicle speed is not "0", the gearshift position is at a position other than P (parking), the ignition is turned ON, the emergency brake is OFF, the exit check SW is turned OFF, or the inner door handle is not operated, assuming there is no intention to get off the vehicle.

According to the fourth operation example, the situation where the possibility of starting to move is low, that is, the situation where the possibility of getting off the vehicle is higher can be elaborately detected compared to the third operation example described above, and thus the control of the mirror surface direction of the side mirror can be more reliably carried out. The fourth operation example is based on the assumption that the gearshift position is at P (parking) and the ignition is turned OFF, but may be based on either one.

### [Fifth operation example]

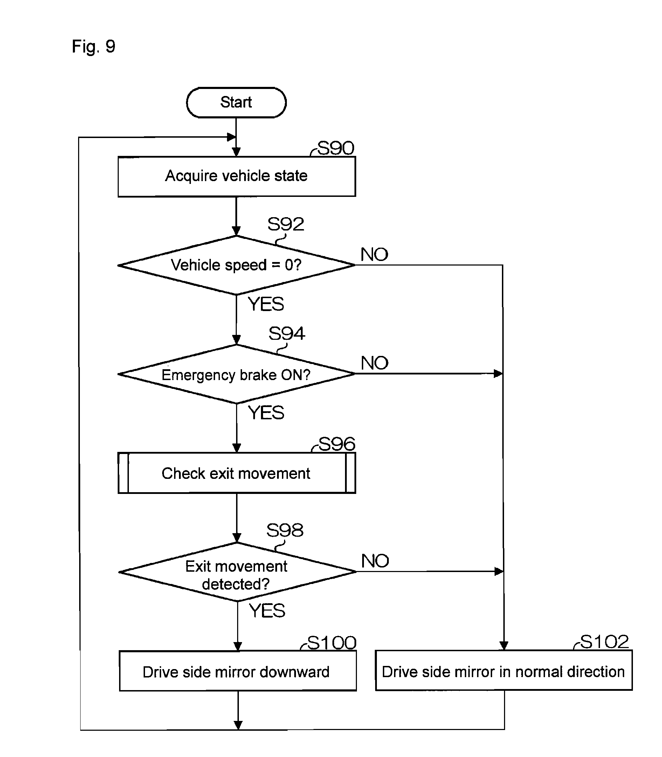

FIG. 9 shows a flowchart for describing a fifth operation example of the mirror drive control device of the vehicle according to the present embodiment. In the fifth operation example, the mirror surface of the side mirror is driven to face the exit checking direction when the vehicle speed is "0" and the emergency brake is ON, and furthermore, when the seatbelt is unlatched, the foot brake is released, the window is closed, the door is unlocked, the steering wheel is released, or when not facing the front, as the exit movement.

The side mirror control device 3 acquires, as the preliminary movement of getting off the vehicle, the vehicle speed from the vehicle speed detection part 1-3, and the state of the emergency brake from the emergency brake state detection part (ON when pulled, OFF when released) (step S90). Whether or not the vehicle speed is "0", that is, whether or not the vehicle is stopped is determine (step S92). When the vehicle speed is "0", that is, when the vehicle is stopped, whether or not the emergency brake is ON is determined (step S94).

If the emergency brake is ON, that is, if the emergency brake is pulled, the exit movement of whether the seatbelt is unlatched, whether the foot brake is released, whether the window is closed, whether the door is unlocked, whether the steering wheel is released, or whether the drive is not facing the front is checked (step S96). The details of the exit movement will be hereinafter described. Whether or not the exit movement is made is then determined (step S98).

The side mirror control device 3 reads out the exit checking direction data from the side mirror position storage device 2 when the exit movement is detected, drives and controls the side mirror drive device 4 according to the exit checking direction data, and drives the mirror surface of the side mirror to face the exit checking direction (downward) (step S100).

The side mirror control device 3 drives the mirror surface of the side mirror so as to face the normal direction (backward) when the vehicle speed is not "0" (traveling), the emergency brake is OFF, or the exit movement is not detected (step S102).

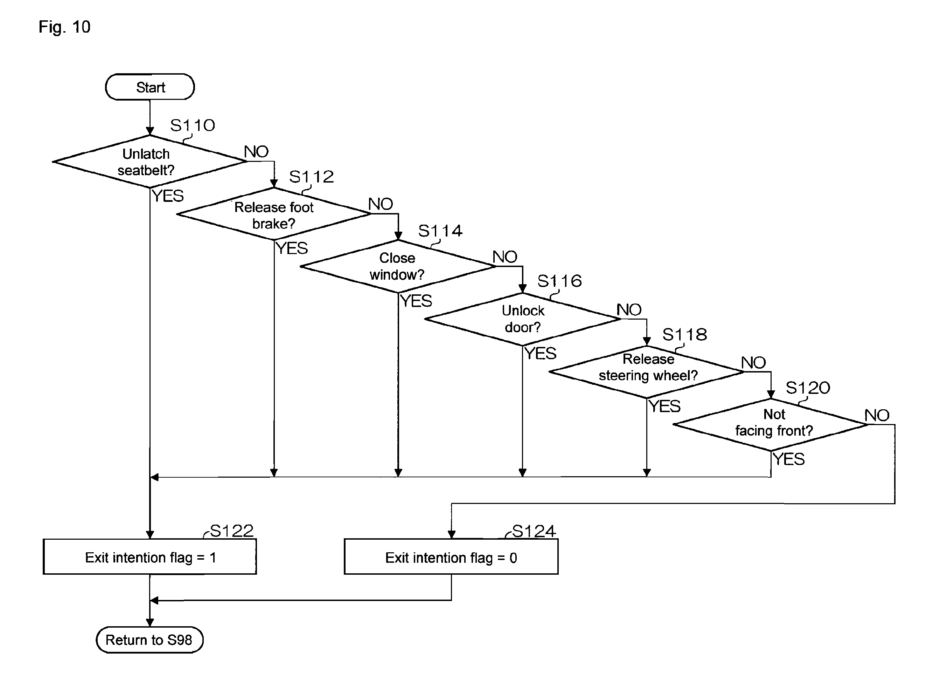

FIG. 10 shows a flowchart for describing the exit movement checking operation in the fifth operation example. The side mirror control device 3 determines whether or not the seatbelt is unlatched from the output of the seatbelt latch detection part 1-7 (step S110), whether or not the foot brake is released from the output of the foot brake state detection part 1-9 (step S112), whether or not the window is closed from the output of the window state detection part 1-11 (step S114), whether or not the door is unlocked from the output of the door lock state detection part 1-8 (step S116), whether or not the steering wheel is released from the output of the steering wheel operation detection part 1-10 (step S118), or whether or not the driver is not facing the front from the output of the driver viewing direction detection part 1-12 (step S120).

The exit intention flag is set to "1" (step S122) assuming there is an intention to get off the vehicle when the seatbelt is unlatched, when the foot brake is released, when the window is closed, when the door is unlocked, when the steering wheel is released, or when not facing the front, and the process is returned to step S98 of FIG. 9.

If not even one exit movement is detected, the exit intention flag is set to "0" assuming there is no intention to get off the vehicle (step S124), and the process is returned to step S98 of FIG. 9.

The side mirror control device 3 drives the mirror surface of the side mirror to face the exit checking direction (downward) when the exit intention flag is "1 ", assuming the exit movement is detected, and drives the mirror surface of the side mirror to face the normal direction (backward) when the exit flag is "0", assuming the exit movement is not detected.

According to the fifth operation example, when the vehicle speed is "0" and the emergency brake is ON, and furthermore as the exit movement, when the seatbelt is unlatched, the foot brake is released, the window is closed, the door is unlocked, the steering wheel is released, or the driver is not facing the front, the mirror surface of the side mirror is driven to face the exit checking direction assuming there is an intention to get off the vehicle, and thus the presence or absence of the intention to get off the vehicle can be more reliably determined by covering the operation until getting off the vehicle.

According to the embodiment described above, an opening path of the door of the vehicle and the mirror position at which the obstacle on the opening path can be easily visually checked are stored, the movement of the passenger to get out of the vehicle is detected by the exit intention detection means, and the mirror surface of the side mirror is moved to the stored position by the mirror driving means so that the door and the object that may hit the door can be visually checked, whereby the passenger can visually check the door and the obstacle near the door such as the curb of the sidewalk and the adjacent vehicle, and can adjust the opening of the door so that the door does not hit the obstacle. Furthermore, if the movement of the passenger to get on the vehicle and start the vehicle is detected, the side mirror is returned to the normal position and thus the mirror is returned to the normal position without requiring a special switch operation when starting the vehicle, whereby troublesome feeling is eliminated.

In the embodiment described above, the side mirror control device 3 may prohibit the mirror drive when determining that it is dangerous to drive the mirror surface of the side mirror downward.

## Claims

1. A mirror drive control device of a vehicle being **characterized by** comprising:
mirror drive means (4) for driving a mirror surface of a side mirror arranged at a predetermined position of the vehicle upward, downward, rightward, leftward;
vehicle state detection means for detecting a state of the vehicle;
determination means (1) for determining whether or not a passenger is getting off the vehicle based on the vehicle state detected by the vehicle state detection means; and
mirror control means (3) for driving and controlling the mirror drive means and moving the mirror surface of the side mirror in an exit checking direction in which a view near the door is ensured when determined that the passenger is getting off the vehicle by the determination means (1).

2. The mirror drive control device of a vehicle according to claim 1, **characterized in that** the vehicle state detection means (1, 1-1) detects whether or not an exit intension check switch operated when getting off the vehicle is operated by the passenger.

3. The mirror drive control device of a vehicle according to claim 1, **characterized in that** the vehicle state detection means (1, 1-2) detects whether or not an inner door handle for opening/closing the door of the vehicle is operated by the passenger.

4. The mirror drive control device of a vehicle according to claim 1,
**characterized in that** the vehicle state detection means (1, 1-6) detects whether or not an ignition for starting an engine of the vehicle is operated by the passenger.

5. The mirror drive control device of a vehicle according to claim 1, **characterized in that** the vehicle state detection means (1, 1-4) detects whether or not an emergency brake for applying brake to four wheels when parking the vehicle is operated by the passenger.

6. The mirror drive control device of a vehicle according to claim 1, **characterized in that** the vehicle state detection means (1, 1-5) detects whether or not a gearshift lever for changing a mission gear ratio of the vehicle is at a predetermined position.

7. The mirror drive control device of a vehicle according to any one of claims 1 to 6, **characterized in that** the mirror control means (3) prohibits the drive by the mirror drive means (4) when determined as dangerous to move the mirror surface of the side mirror by the mirror drive means (4).
